# EUROPÄISCHE PATENTANMELDUNG

(11) **EP 4 787 502 A1**
(43) Veröffentlichungstag der Anmeldung: **05.08.2026**
(21) Anmeldenummer: 25155013.3
(22) Anmeldetag: 30.01.2025
(51) Int. Cl.: H01M 4/86, C25B 1/04, C25B 11/031, C25B 11/052, C25B 11/054, C25B 11/061, H01M 4/88, H01M 4/90

(54) **VERFAHREN ZUR HERSTELLUNG EINES KATALYSATORS**

(71) Anmelder: Oberland Mangold GmbH, 82438 Eschenlohe (DE)
(72) Erfinder: Günther, Timon, 82438 Eschenlohe (DE); Vehlen, Frank, 82438 Eschenlohe (DE); Wang, Yuqing, 82438 Eschenlohe (DE); Mangold, Christian, 82438 Eschenlohe (DE); Mangold, Tobias, 82438 Eschenlohe (DE); Knab, Christian, 82438 Eschenlohe (DE)
(74) Vertreter: Weickmann & Weickmann PartmbB

(57) **Zusammenfassung**

Die vorliegende Erfindung betrifft ein Verfahren zur Herstellung eines Katalysators unter Luftausschluss, den dadurch hergestellten Katalysator sowie dessen Verwendung bei der Elektrolyse oder in Batterien.

## Beschreibung

Die vorliegende Erfindung betrifft ein Verfahren zur Herstellung eines Katalysators unter Luftausschluss, den dadurch hergestellten Katalysator sowie dessen Verwendung bei der Elektrolyse oder in Batterien.

Die katalytische Herstellung von Wasserstoff ist ein bedeutendes Verfahren in der chemischen Industrie, das vor allem auf Grund des steigenden Bedarfs an sauberer Energie unter Verringerung von Treibhausgasemissionen an Bedeutung gewonnen hat. Die wichtigsten Methoden zur katalytischen Wasserstoffproduktion sind Dampfreformierung von Erdgas, partielle Oxidation, autotherme Reformierung, Elektrolyse und photokatalytische Wasserspaltung. Bei der Elektrolyse von Wasser zu Wasserstoff wird momentan zwischen vier Haupttechnologien unterschieden: die Alkalielektrolyse (AEL), die Proton-Exchange-Membrane-Elektrolyse (PMEL), die Hochtemperaturelektrolyse (HTEL) und die Anion-Exchange-Membrane-Elektrolyse (AEMEL).

Die am häufigsten eingesetzte Elektrolysetechnologie ist die AEL. Hierbei werden zwei metallische Elektroden in einer alkalisch-wässrigen, elektrisch-leitfähigen Lösung, das sogenannte Elektrolyt, eingetaucht. Durch Anlegen einer Gleichspannung erfolgt die elektrolytische Wasserspaltung an der Kathode zu Wasserstoff und Hydroxydionen.

Bei der alkalischen Elektrolyse handelt es sich um eine erprobte Technologie, deren Betriebskosten niedrig sind auch weil keine teuren Edelmetallkatalysatoren notwendig sind. Allerdings ist der Wirkungsgrad im Vergleich zu den alternativen Elektrolyseverfahren etwas geringer.

Heutzutage werden üblicherweise Raney-Nickel-Elektroden für die AEL eingesetzt.

Raney-Nickel wird häufig als Katalysator in chemischen und elektrochemischen Prozessen verwendet. Raney-Nickel ist ein feinkörniger, poröser Feststoff, der hauptsächlich aus Nickel besteht und durch Auslaugen von Nickel-AluminiumLegierungen mit Natriumhydroxid hergestellt wird. Raney-Nickel hat eine große Oberfläche und ist chemisch stabil.

Aufgabe der vorliegenden Erfindung ist es, Elektrodenmaterialien insbesondere aus Raney-Nickel bereitzustellen, die gegenüber dem Stand der Technik eine höhere katalytische Aktivität und eine möglichst hohe Langzeitstabilität aufweisen. Überraschenderweise wurde nun gefunden, dass mit dem erfindungsgemäßen Verfahren nicht nur die katalytische Aktivität, sondern auch die Langzeitstabilität des erhaltenen Katalysators verbessert werden kann. Ohne an eine Theorie gebunden zu sein, kann durch das erfindungsgemäße Verfahren die Oberfläche des Katalysators vergrößert und somit die katalytische Aktivität erhöht werden.

In einem Aspekt betrifft die Erfindungen daher ein Verfahren zur Herstellung eines Katalysators umfassend die Schritte:
(a) Bereitstellen eines metallischen Substrats, insbesondere eines metallischen Nickel-Substrats,
(b) Aufbringen einer Suspension umfassend mindestens ein Bindemittel, mindestens ein Lösungsmittel, metallische Partikel, insbesondere Aluminium-, Zinn-, Zink-, Molybdän-, Silizium-, Eisen- und/oder KupferPartikel, besonders bevorzugt Aluminium-Partikel, und ggf. mindestens ein Metalloxid, Metallphosphid und/oder Metallsulfid, auf das metallische Substrat,
(c) thermisches Behandeln des nach Schritt (b) erhaltenen beschichteten metallischen Substrats gemäß den folgenden Schritten:
   (c-1) Aufheizen von Raumtemperatur auf 440-462 °C ggf. bei einem Druck von 5*10⁻⁶-15 mbar und/oder unter Inertgasatmosphäre,
   (c-2) ggf. Halten der Temperatur nach Schritt (c-1) für 1-15 min, bevorzugt 1-5 min,
   (c-3) Aufheizen nach Schritt (c-1) oder (c-2) auf 640-720 °C bei einem Druck von 10⁻² bis 10⁻⁶ mbar und/oder unter Inertgasatmosphäre,
   (c-4) Halten der Temperatur nach Schritt (c-3) für 5-30 min, bevorzugt 10-20 min, bei einem Druck von 10⁻² bis 10⁻⁶ mbar und/oder unter Inertgasatmosphäre,
   (c-5) Abkühlen auf 440-462 °C bei einem Druck von 10⁻² bis 10⁻⁶ mbar und/oder unter Inertgasatmosphäre nach Schritt (c-4), und
   (c-6) Abkühlen auf Raumtemperatur nach Schritt (c-5) und
(d) Behandeln des nach Schritt (c) erhaltenen Produkts in alkalischer Lösung, bevorzugt bei erhöhter Temperatur.

Das metallische Substrat kann aus dem Metall bestehen oder ein metallisierter Körper sein. Das metallische Substrat ist insbesondere ein Nickel-, Eisen- oder ein Kupfersubstrat und besonders bevorzugt ein Nickel-Substrat. Das metallische Substrat kann vernickelt oder verkupfert sein. Die außenliegende metallisierte Schicht aus Kupfer oder Nickel hat bevorzugt eine Dicke von mindestens 50 µm, stärker bevorzugt 100 µm-5 mm.

Beispielsweise kann der metallisierte Körper ein vernickelter Eisen- oder Stahllkern sein.

Das metallische Substrat liegt bevorzugt in Form eines Films, Gewebes, Blechs, Lochblechs, Blechgewebes, Streckmetalls, Schaums, Partikels oder einer Platte vor. Das metallische Substrat ist bevorzugt porös und hat insbesondere eine Porosität von 1-70 %, stärker bevorzugt 10-50 % gemessen gemäß DIN ISO 9277.

Im Falle eines Films, einer Platte, eines Lochblechs, eines Blechgewebes oder Blechs ist die Dicke bevorzugt 0,01-0,5 mm, stärker bevorzugt 0,1-2 mm.

Liegt das metallische Substrat in Form eines Partikels vor, ist der durchschnittliche Partikeldurchmesser bevorzugt im Bereich von 2-72 µm, stärker bevorzugt 7-63 µm. Die Partikelgrößenverteilung d50 der Partikel ist bevorzugt im Bereich von 20-45 µm, stärker bevorzugt im Bereich von 25-40 µm.

Das metallische Substrat oder die metallisierte Schicht hat bevorzugt eine Reinheit von mindestens 90 %, bevorzugt 99 Gew.-%, stärker bevorzugt von 99 bis 99,9 Gew.-%. In alternativen Ausführungsformen kann das metallische Substrat auch eine Legierung bevorzugt eine Eisenlegierung, insbesondere Edelstahl, wie zum Beispiel Fe-Cr-Ni-Mo oder Fe-Cr-Ni-Legierung sein.

Erfindungsgemäß wird eine Suspension umfassend mindestens ein Bindemittel, mindestens ein Lösungsmittel, metallische Partikel, insbesondere Aluminium-, Zinn, Zink-, Molybdän-, Silizium-, Eisen- und/oder Kupferpartikel, besonders bevorzugt Aluminiumpartikel, und ggf. mindestens ein Metalloxid, Metallphosphid und/oder Metallsulfid, auf das metallische Substrat aufgebracht.

Das Bindemittel ist bevorzugt ein organisches Bindemittel, stärker bevorzugt ein organisches Polymer, wie zum Beispiel Polyvinylacetat, Polyvinylalkohol, Polyvinylbutyral, Polypyrrol oder Polyvinylpyrrolidon. Das gewichtsmittlere Molekulargewicht des organischen Polymers liegt bevorzugt bei 1.000-40.000 g/mol.

Die metallischen Partikel sind insbesondere aus Aluminium, Zinn, Silizium, Eisen und/oder Kupfer. Bevorzugt werden Aluminium oder Aluminium-Zinnpartikel verwendet. Die metallischen Partikel haben bevorzugt einen mittleren Partikeldurchmesser von 1-70 µm, stärker bevorzugt 4-32 µm. Bevorzugt ist die Partikelgrößenverteilung d50 der metallischen Partikel im Bereich von 20-60 µm, stärker bevorzugt 20-35 µm.

In einer bevorzugten Ausführungsform ist das metallische Substrat oder die äußere Schicht des metallischen Substrats in der Metallart unterschiedlich zu den metallischen Partikeln in der Suspension.

In einer bevorzugten Ausführungsform ist das metallische Substrat ein NickelSubstrat oder ein vernickeltes Substrat und die metallischen Partikel sind Aluminium- oder Aluminium-Zinn-Partikel.

Die Suspension kann ferner ein Metalloxid, Metallphosphid und/oder Metallsulfid umfassen. Das Metalloxid hat bevorzugt eine kubische, orthorhombische oder tetragonale Kristallstruktur, stärker bevorzugt eine Perowskit-Struktur oder Spinell-Struktur. Bevorzugt hat das Metalloxid die Formel ABOs, AB₂O₄ oder A₂B₂O₆, wobei A mindestens ein Metallkation ausgewählt aus Li-, Na-, K-, Ca-, Rb-, Sr-, Y-, Ba-, Ag-, Bi-, La-, Ce-, Pr-, Nd-, Sm- und Gd-Kationen, bevorzugt La-, Sr-, Ba- und Ca-Kationen, ist und
B mindestens ein Metallkation ausgewählt aus Mg-, Sc-, Ti-. V-, Cr-, Mn-, Fe-, Co-, Ni-, Cu-, Zn-, Ga-, Al-, Ge-, Zr-, Nb-, Mo-, Ru-, Pd-, Cd-, In-, Sn-, Sb-, Ta- und Ir-Kationen, bevorzugt Cr-, Mn-, Fe-, Co-, Ni-, Ru-, Pd-lonen ist.

Das Metallsulfid liegt bevorzugt in einer Stannit-, Cu₂FeSnS₄-, Cu₂CoSnS₄-, Ag₂ZnSnS₄-Struktur vor.

Das Metallphosphid liegt bevorzugt in einer NiP-, Ni₂P-. CoP-, Co₂P- oder CosBPOv-Struktur vor.

Metalloxid, Metallphosphid und/oder Metallsulfid liegen bevorzugt als Partikel vor, welche bevorzugt einen mittleren Partikeldurchmesser von 1 nm-44 µm, stärker bevorzugt 10 nm-10 µm, noch stärker bevorzugt 10 nm-1µm. Die Partikelgrößenverteilung d50 dieser Partikel liegt bevorzugt im Bereich von 50 nm-10 µm, stärker bevorzugt 50 nm-500 nm.

Als Lösungsmittel werden bevorzugt Wasser und/oder ein organisches Lösungsmittel verwendet. Das Lösungsmittel ist bevorzugt in der Lage, das Bindemittel vollständig bei 23 °C zu lösen. Geeignete organische Lösungsmittel sind z.B. Isopropanol, Aceton, Dimethylformamid, Butanol, Ethanol oder eine Mischung davon.

Die Suspension wird durch Mischen der oben beschriebenen Bestandteile hergestellt. Die Suspension ist bevorzugt homogen und wird bevorzugt mit einem Flächengewicht von 20-200 g/m², bevorzugt 50 bis 100 g/m² auf das metallische Substrat aufgetragen.

Bevorzugt enthält die Suspension im Schritt (b)
- 50-75 Gew.-% Lösungsmittel,
- 1-10 Gew.-% Bindemittel,
- 20-35 Gew.-% metallische Partikel und
- ggf. 0,1-10 Gew.-% Metalloxid, Metallphosphid und/oder Metallsulfid.

Nach Schritt (b) und vor Schritt (c) kann gegebenenfalls noch ein Trocknungsschritt erfolgen, um das Lösungsmittel zumindest teilweise zu entfernen.

Im Schritt (c) wird das erhaltene beschichtete Substrat thermisch behandelt. Insbesondere wird der thermische Behandlungsschritt (c) in einem Hochvakuumofen durchgeführt.

Es hat sich gezeigt, dass das Temperaturprofil für die Behandlung des nach Schritt (b) erhaltenen Produkts einen wesentlichen Einfluss auf die Gesamtstruktur des Endprodukts hat. Ferner hat sich überraschenderweise gezeigt, dass unter Ausschluss von (Luft-)Sauerstoff, d.h. insbesondere bei einem verminderten Druck und/oder unter Inertgasatmosphäre in bestimmten Schritten, besonders aktive Katalysatoren erhalten werden können.

Im Schritt (c-1) wird das beschichtete metallische Substrat von Raumtemperatur (0-25 °C) auf 440-462°C gegebenenfalls bei einem Druck von 5*10⁻⁶-15 mbar und/oder unter Inertgasatmosphäre, wie z.B. unter Stickstoff, Helium, Neon oder ArgonAtmosphäre erhitzt. Schritt (c-1) kann bevorzugt bei 10⁻²-10⁻⁶ mbar erfolgen.

Schritt (c-1) erfolgt bevorzugt mit einer Heizrate von 5-20 K/min, stärker bevorzugt 5-9 K/min. Das Aufheizen von Raumtemperatur auf die beanspruchte Temperatur in Schritt (c-1) erfolgt bevorzugt innerhalb von 20-90 Minuten.

Nach Schritt (c-1) kann im Schritt (c-2) die Temperatur für 1-15 Minuten, bevorzugt 1-5 Minuten, bei 440-462°C aufrechterhalten werden. Schritt (c-2) kann bevorzugt bei 10⁻²-10⁻⁶ mbar erfolgen. Die Leckrate in Schritt (c-2) ist dann bevorzugt ≤10⁻¹.

Im Schritt (c-3) wird das metallische Substrat nach Schritt (c-1) oder Schritt (c-2) auf 640-720 °C bei einem Druck von 10⁻²-10⁻⁶ mbar und/oder unter Inertgasatmosphäre erhitzt. Schritt (c-3) kann bevorzugt bei 10⁻²-10⁻⁶ mbar erfolgen. Die Leckrate in Schritt (c-3) ist dann bevorzugt ≤10⁻¹.

Der Temperaturanstieg kann mit einer Heizrate von 1,5-25 K/min, bevorzugt 3-15 K/min, erfolgen. Bevorzugt erfolgt das Aufheizen von 440-462 °C auf 640-720°C innerhalb von 20-60 Minuten.

Das metallische Substrat wird im Schritt (c-4) bei der erreichten Temperatur für 5-30 Minuten, bevorzugt 10-20 Minuten gehalten. Schritt (c-5) erfolgt bei einem Druck von 10⁻²-10⁻⁶ mbar oder unter Inertgasatmosphäre. Die Leckrate in Schritt (c-4) ist dann bevorzugt ≤10⁻¹.

Anschließend wird im Schritt (c-5) das metallische Substrat auf 440-462 °C bei einem Druck von 10⁻²-10⁻⁶ mbar und/oder unter Inertgasatmosphäre abgekühlt. Bevorzugt ist die Abkühlrate bei 3-20 K/min, stärker bevorzugt 3-7 K/min. Der Abkühlvorgang in Schritt (c-5) erfolgt bevorzugt innerhalb von 20-110 Minuten. Die Leckrate in Schritt (c-5) ist dann bevorzugt ≤10⁻¹. Schritt (c-5) kann durch Fluten der Umgebung mit Stickstoff erfolgen.

Anschließend kann das metallische Substrat im Schritt (c-6) mit einer Abkühlrate von 0,5-35 K/min abgekühlt werden. Bevorzugt erfolgt Schritt (c-6) bei 10⁻²-10⁻⁶ mbar Üblicherweise dauert der Abkühlprozess auf Raumtemperatur (0-25°C), zwischen 50-240 Minuten. Schritt (c-6) kann durch Fluten der Umgebung mit Stickstoff erfolgen.

Das nach Schritt (c-6) erhaltene Produkt wird anschließend im Schritt (d) in alkalischer Lösung behandelt. Durch die Lauge werden die löslichen Legierungsbestandteile des Materials entfernt. Geeignete alkalische Lösung ist eine Alkalihydroxydlösung, insbesondere Natriumhydroxid oder Kaliumhydroxidlösung.

Die Alkalihydroxydlösung wird insbesondere in einer Konzentration von 1-8 mol/l in Wasser verwendet.

Weiterhin kann der Alkalihydroxydlösung ein Salz zugefügt werden, das die Einstellung eines chemischen Gleichgewichts bei der Laugungsreaktion und somit Verlangsamung und Einstellung der Auslaugung verhindert. Geeignete Salze sind z.B. Kaliumnatriumtartrat bzw. Seignettesalz.

Schritt (d) erfolgt üblicherweise bei Raumtemperatur oder bevorzugt bei erhöhter Temperatur z.B. im Bereich von 20-80 °C. Schritt (d) kann ca. 12-36 Stunden dauern.

Ein weiterer Aspekt der Erfindung ist ein Katalysator, der durch das erfindungsgemäße Verfahren erhältlich ist.

Der erfindungsgemäße Katalysator kann bei der Elektrolyse, insbesondere Chloralkalielektrolyse, oder in Batterien, beispielsweise Zink-Luft-Batterien, eingesetzt werden.

Die Erfindung wird durch das folgende Beispiel näher beschrieben, ist aber nicht darauf beschränkt.
**Figur 1** Temperaturprofil zur Herstellung eines erfindungsgemäßen Katalysators in einem Hochvakuumofen.
**Figur 2** REM-Aufnahme eines erfindungsgemäßen Katalysators

### Beispiel

### Materialien:

| | |
|---|---|
| Metallisches Substrat: | Nickel, 99,9 % |
| Metallische Partikel: | Aluminiumpartikel mit einem Zinngehalt von unter 5 Gew.-%; |
| d50: | 16 µm |

### Herstellung der Suspension:

Die Bindemittel (18-21 Gew.-% PVA; 75-81 Gew.-% PVB und 1-4 Gew.-% Polyvinylacetat) werden in Isopropanol im Gewichtsverhältnis Lösungsmittel:Bindemittel von 15:1 gelöst. Die metallischen Aluminiumpartikel werden zur Mischung in einem Anteil von 20-30 Gew.-% zugegeben.

5-20 mg/cm² der Suspension werden auf das Substrat mittels Sprühbeschichtung aufgetragen. Das beschichtete Substrat wird anschließend bei 60 °C gelagert, bis das Lösungsmittel verdampft ist.

Das beschichtete Substrat wird anschließend mit einer Heizrate von 7,3 K/min auf 460°C unter Hochvakuum (5×10⁻⁴ mbar) erhitzt. Die Temperatur wird für 3 Minuten gehalten (Hochvakuum) und das beschichtete Substrat mit einer Aufheizrate von 5,5 K/min auf 680°C unter Hochvakuum weiter erhitzt. Auf diesem Temperaturniveau wird das beschichtete Substrat 15 Minuten unter Hochvakuum gehalten. Längere Haltezeiten führen zur Einstellung von unlaugbaren NiAI-Phasen.

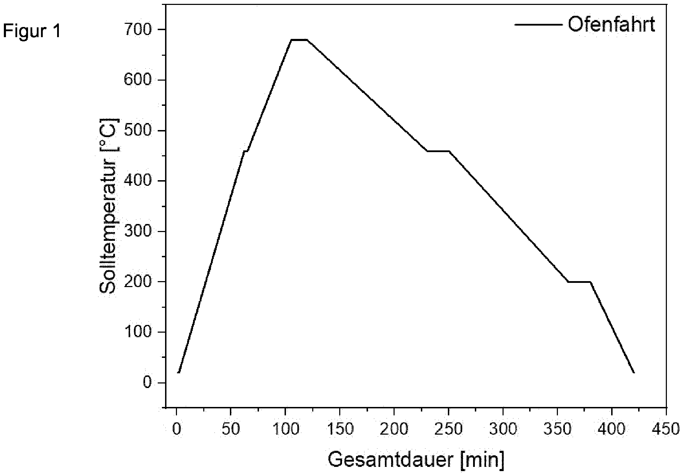

Anschließend wird das Substrat mit einer Abkühlrate von 3,8 K/min auf 450°C unter Hochvakuum abgekühlt. Ein weiteres Abkühlen auf 200 °C mit einer Abkühlrate von 1,6 K/min und auf Raumtemperatur mit einer Abkühlrate von 5,0 K/min findet über einen Zeitraum von 40 min statt. Das Temperaturprofil ist in Figur 1 dargestellt.

Das abgekühlte Substrat wird anschließend mit einer 1-8 molaren Natriumhydroxidlösung mit 1,5 mol/l Tartrat bei 80 °C über 24 h gelaugt.

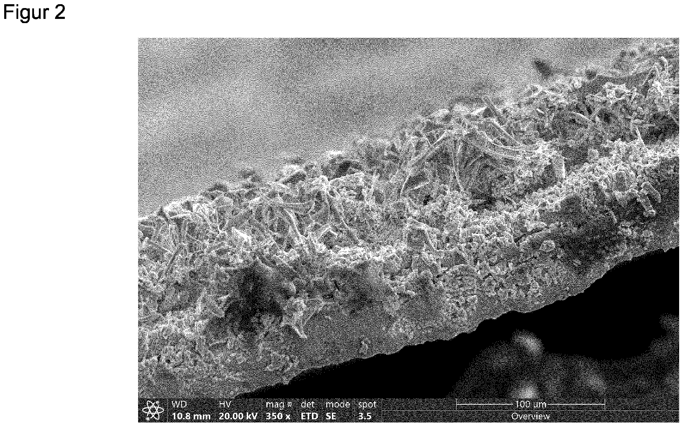

In Figur 2 ist die gelaugte Probe mittels REM untersucht worden. Im unteren Teil ist das noch vorhandene Nickelsubstrat zu erkennen auf dessen Oberfläche nach dem Laugen unlaugbare Nickelaluminiumphasen verblieben sind. Die Porosität der Materialien ist gegenüber herkömmlich hergestelltem Raney-Nickel signifikant erhöht. Dies führt zu einer erhöhten Aktivität des Katalysatormaterials.

Die Erfindung umfasst die folgenden Punkte:
1. Verfahren zur Herstellung eines Katalysators, umfassend die Schritte
   (a) Bereitstellen eines metallischen Substrats, insbesondere eines metallischen Nickel-Substrats,
   (b) Aufbringen einer Suspension umfassend mindestens ein Bindemittel, mindestens ein Lösungsmittel, metallische Partikel, insbesondere Aluminium-, Zinn-, Zink-, Molybdän-, Silizium-, Eisen- und/oder KupferPartikel, besonders bevorzugt Aluminium-Partikel, und ggf. mindestens ein Metalloxid, Metallphosphid und/oder Metallsulfid, auf das metallische Substrat,
   (c) thermisches Behandeln des nach Schritt (b) erhaltenen beschichteten metallischen Substrats gemäß den folgenden Schritten:
      (c-1) Aufheizen von Raumtemperatur auf 440-462 °C ggf. bei einem Druck von 5*10⁻⁶-15 mbar und/oder unter Inertgasatmosphäre,
      (c-2) ggf. Halten der Temperatur nach Schritt (c-1) für 1-15 min, bevorzugt 1-5 min,
      (c-3) Aufheizen nach Schritt (c-1) oder (c-2) auf 640 °C-720 °C bei einem Druck von 10⁻² bis 10⁻⁶ mbar und/oder unter Inertgasatmosphäre,
      (c-4) Halten der Temperatur nach Schritt (c-3) für 5-30 min, bevorzugt 10-20 min, bei einem Druck von 10⁻² bis 10⁻⁶ mbar und/oder unter Inertgasatmosphäre,
      (c-5) Abkühlen auf 440-462 °C bei einem Druck von 10⁻² bis 10⁻⁶ mbar und/oder unter Inertgasatmosphäre nach Schritt (c-4), und
      (c-6) Abkühlen auf Raumtemperatur nach Schritt (c-5) und
   (d) Behandeln des nach Schritt (c) erhaltenen Produkts in alkalischer Lösung, bevorzugt bei erhöhter Temperatur.
2. Verfahren nach Punkt 1, wobei sich das Substrat und die Partikel in der Metallart unterscheiden.
3. Verfahren nach Punkt 1 oder 2, wobei das metallische Substrat in Form eines Films, Lochblechs, Blechgewebes, Streckmetalls, Schaums, Partikels oder einer Platte vorliegt und bevorzugt porös ist.
4. Verfahren nach einem der vorhergehenden Punkte, wobei das metallische Substrat eine Porosität von 1-70 %, bevorzugt 10-50 % gemessen nach DIN ISO 9277 aufweist.
5. Verfahren nach einem der Punkte 3 oder 4, wobei der Film, die Platte, das Lochblech, Blechgewebe oder Blech eine Dicke von 0,01-5 mm, bevorzugt 0,1-2 mm aufweist.
6. Verfahren nach einem der Punkte 3 oder 4, wobei der durchschnittliche Partikeldurchmesser im Bereich von 2-72 µm, bevorzugt 7-63 µm liegt.
7. Verfahren nach einem der vorhergehenden Punkt, wobei das metallische Substrat, insbesondere metallische Nickelsubstrat, in einer Reinheit von mindestens 99 Gew.-%, bevorzugt 99-99,9 Gew.-% vorliegt.
8. Verfahren nach einem der vorhergehenden Punkte, wobei das Bindemittel ein organisches Bindemittel, insbesondere ein organisches Polymer, wie z.B. Polyvinylacetat, Polyvinylalkohol, Polyvinylbutyral, Polypyrrol oder Polyvinylpyrrolidon, bevorzugt mit einem gewichtsmittleren Molgewicht von 1.000-40.000 g/mol ist.
9. Verfahren nach einem der vorhergehenden Punkte, wobei das Metalloxid Metallphosphid oder Metallsulfid als Feststoff, insbesondere als Partikel, insbesondere mit einem mittleren Partikeldurchmesser von 1 nm bis 44 µm, bevorzugt 10 nm bis 10 µm, vorliegt.
10. Verfahren nach einem der vorhergehenden Punkte, wobei das Metalloxid die Formel ABO₃, AB₂O₄ oder A₂B₂O₆ aufweist, wobei
   A mindestens ein Metallkation ausgewählt aus Li-, Na-, K-, Ca-, Rb-, Sr-, Y-, Cs-, Ba-, Ag-, Bi-, La-, Ce-, Pr-, Nd-, Sm- und Gd-Kationen, bevorzugt La-, Sr-, Ba- und Ca-Kationen, ist und
   B mindestens ein Metallkation ausgewählt aus Mg-, Sc-, Ti-. V-, Cr-, Mn-, Fe-, Co-, Ni-, Cu-, Zn-, Ga-, Al-, Ge-, Zr-, Nb-, Mo-, Ru-, Pd-, Cd-, In-, Sn-, Sb-, Ta-, W-, Ir-, Pb-, Dy-, Ho- und Yb-Kationen, bevorzugt Cr-, Mn-, Fe-, Co-, Ni-, Ru-, Pd-Ionen ist.
11. Verfahren nach einem der vorhergehenden Punkte, wobei das Metallsulfid in einer Stannit-Struktur vorliegt.
12. Verfahren nach einem der vorhergehenden Punkte, wobei das Lösungsmittel Wasser und/oder ein organisches Lösungsmittel ist, das bevorzugt in der Lage ist, das Bindemittel vollständig bei 23 °C zu lösen und insbesondere Isopropanol, Aceton, Dimethylformamid, Butanol, Ethanol oder eine Mischung davon ist.
13. Verfahren nach einem der vorhergehenden Punkte, wobei die Suspension in Schritt (b) homogen ist.
14. Verfahren nach einem der vorhergehenden Punkte, wobei die Suspension mit einem Flächengewicht von 20-200 g/m², bevorzugt 50-100 g/m² aufgetragen wird.
15. Verfahren nach einem der vorhergehenden Punkte, wobei Schritt (c) in einem Hochvakuumofen durchgeführt wird.
16. Verfahren nach einem der vorhergehenden Punkte, wobei Schritt (c-1) mit einer Heizrate von 5-20 K/min, bevorzugt 5-9 K/min, und/oder innerhalb von 20-90 min erfolgt.
17. Verfahren nach einem der vorhergehenden Punkte, wobei Schritt (c-1) bei 10⁻² bis 10⁻⁶ mbar erfolgt.
18. Verfahren nach einem der vorhergehenden Punkte, wobei Schritt (c-2) bei 10⁻² bis 10⁻⁶ mbar erfolgt.
19. Verfahren nach einem der vorhergehenden Punkte, wobei Schritt (c-3) bei einer Heizrate von 1,5-25 K/min, bevorzugt 3-15 K/min und/oder innerhalb von 20-60 min erfolgt.
20. Verfahren nach einem der vorhergehenden Punkte, wobei Schritt (c-3) bei 10⁻² bis 10⁻⁶ mbar erfolgt.
21. Verfahren nach einem der vorhergehenden Punkte, wobei Schritt (c-4) bei 10⁻² bis 10⁻⁶ mbar erfolgt.
22. Verfahren nach einem der vorhergehenden Punkte wobei die Leckrate in Schritt (c-2) ≤ 10⁻¹ und/oder in Schritt (c-3) ≤10⁻¹ und/oder in den Schritten (c-4) oder (c-5) ≤10⁻¹ ist.
23. Verfahren nach einem der vorhergehenden Punkte, wobei Schritt (c-5) bei einer Abkühlrate von 3-20 K/min, bevorzugt 3-7 K/min und/oder innerhalb von 20-110 min erfolgt.
24. Verfahren nach einem der vorhergehenden Punkte, wobei Schritt (c-5) bei 10⁻² bis 10⁻⁶ mbar erfolgt.
25. Verfahren nach einem der vorhergehenden Punkte, wobei Schritt (c-6) bei einer Abkühlrate von 0,5-35 K/min erfolgt und/oder innerhalb von 15-240 min.
26. Verfahren nach einem der vorhergehenden Punkte, wobei Schritt (c-5) und/oder (c-6) durch Fluten mit Stickstoff erfolgt.
27. Verfahren nach einem der vorhergehenden Punkte, wobei die alkalische Lösung in Schritt (d) eine 1-8 molare Alkalihydroxidlösung in Wasser ist, die ggf. Kalium-Natriumtartratenthält.
28. Verfahren nach einem der vorhergehenden Punkte, wobei Schritt (d) bei Temperaturen von 20-80 °C erfolgt.
29. Katalysator erhältlich durch ein Verfahren nach einem der Punkte 1-27.
30. Verwendung des Katalysators nach Punkt 28 in der Elektrolyse, Zink-Luft-Batterien, Chlor-Alkali-Elektrolyse.

## Patentansprüche

1. Verfahren zur Herstellung eines Katalysators, umfassend die Schritte
(a) Bereitstellen eines metallischen Substrats, insbesondere eines metallischen Nickel-Substrats,
(b) Aufbringen einer Suspension umfassend mindestens ein Bindemittel, mindestens ein Lösungsmittel, metallische Partikel, insbesondere Aluminium-, Zinn-, Zink-, Molybdän-, Silizium-, Eisen- und/oder KupferPartikel, besonders bevorzugt Aluminium-Partikel, und ggf. mindestens ein Metalloxid, Metallphosphid und/oder Metallsulfid, auf das metallische Substrat,
(c) thermisches Behandeln des nach Schritt (b) erhaltenen beschichteten metallischen Substrats gemäß den folgenden Schritten:
(c-1) Aufheizen von Raumtemperatur auf 440-462 °C ggf. bei einem Druck von 5*10⁻⁶-15 mbar und/oder unter Inertgasatmosphäre,
(c-2) ggf. Halten der Temperatur nach Schritt (c-1) für 1-15 min, bevorzugt 1-5 min,
(c-3) Aufheizen nach Schritt (c-1) oder (c-2) auf 640 °C-720 °C bei einem Druck von 10⁻² bis 10⁻⁶ mbar und/oder unter Inertgasatmosphäre,
(c-4) Halten der Temperatur nach Schritt (c-3) für 5-30 min, bevorzugt 10-20 min, bei einem Druck von 10⁻² bis 10⁻⁶ mbar und/oder unter Inertgasatmosphäre,
(c-5) Abkühlen auf 440-462 °C bei einem Druck von 10⁻² bis 10⁻⁶ mbar und/oder unter Inertgasatmosphäre nach Schritt (c-4), und
(c-6) Abkühlen auf Raumtemperatur nach Schritt (c-5) und
(d) Behandeln des nach Schritt (c) erhaltenen Produkts in alkalischer Lösung, bevorzugt bei erhöhter Temperatur.

2. Verfahren nach Anspruch 1, wobei das metallische Substrat in Form eines Films, Lochblechs, Blechgewebes, Streckmetalls, Schaums, Partikels oder einer Platte vorliegt, bevorzugt porös ist, insbesondere eine Porosität von 1-70 % gemessen nach DIN ISO 9277 aufweist.

3. Verfahren nach einem der Ansprüche 1 oder 2, wobei der Film, die Platte, das Lochblech, Blechgewebe oder Blech eine Dicke von 0,01-5 mm, bevorzugt 0,1-2 mm aufweist oder
der durchschnittliche Partikeldurchmesser im Bereich von 2-72 µm, bevorzugt 7-63 µm liegt und/oder
das metallische Substrat, insbesondere metallische Nickelsubstrat, in einer Reinheit von mindestens 99 Gew.-%, bevorzugt 99-99,9 Gew.-% vorliegt.

4. Verfahren nach einem der vorhergehenden Ansprüche, wobei das Bindemittel ein organisches Bindemittel, insbesondere ein organisches Polymer, wie z.B. Polyvinylacetat, Polyvinylalkohol, Polyvinylbutyral, Polypyrrol oder Polyvinylpyrrolidon, bevorzugt mit einem gewichtsmittleren Molgewicht von 1.000-40.000 g/mol ist.

5. Verfahren nach einem der vorhergehenden Ansprüche, wobei das Metalloxid Metallphosphid oder Metallsulfid als Feststoff, insbesondere als Partikel, insbesondere mit einem mittleren Partikeldurchmesser von 1 nm bis 44 µm, bevorzugt 10 nm bis 10 µm, vorliegt und/oder
wobei das Metalloxid die Formel ABO₃, AB₂O₄ oder A₂B₂O₆ aufweist, wobei A mindestens ein Metallkation ausgewählt aus Li-, Na-, K-, Ca-, Rb-, Sr-, Y-, Cs-, Ba-, Ag-, Bi-, La-, Ce-, Pr-, Nd-, Sm- und Gd-Kationen, bevorzugt La-, Sr-, Ba- und Ca-Kationen, ist und
B mindestens ein Metallkation ausgewählt aus Mg-, Sc-, Ti-. V-, Cr-, Mn-, Fe-, Co-, Ni-, Cu-, Zn-, Ga-, Al-, Ge-, Zr-, Nb-, Mo-, Ru-, Pd-, Cd-, In-, Sn-, Sb-, Ta-, W-, Ir-, Pb-, Dy-, Ho- und Yb-Kationen, bevorzugt Cr-, Mn-, Fe-, Co-, Ni-, Ru-, Pd-lonen ist und/oder
wobei das Metallsulfid in einer Stannit-Struktur vorliegt.

6. Verfahren nach einem der vorhergehenden Ansprüche, wobei das Lösungsmittel Wasser und/oder ein organisches Lösungsmittel ist, das bevorzugt in der Lage ist, das Bindemittel vollständig bei 23 °C zu lösen und insbesondere Isopropanol, Aceton, Dimethylformamid, Butanol, Ethanol oder eine Mischung davon ist.

7. Verfahren nach einem der vorhergehenden Ansprüche, wobei die Suspension mit einem Flächengewicht von 20-200 g/m², bevorzugt 50-100 g/m² aufgetragen wird.

8. Verfahren nach einem der vorhergehenden Ansprüche, wobei Schritt (c) in einem Hochvakuumofen durchgeführt wird und/oder
wobei Schritt (c-1) mit einer Heizrate von 5-20 K/min, bevorzugt 5-9 K/min, und/oder innerhalb von 20-90 min erfolgt und/oder
wobei Schritt (c-1) bei 10⁻² bis 10⁻⁶ mbar erfolgt und/oder
wobei Schritt (c-2) bei 10⁻² bis 10⁻⁶ mbar erfolgt und/oder
wobei Schritt (c-3) bei einer Heizrate von 1,5-25 K/min, bevorzugt 3-15 K/min und/oder innerhalb von 20-60 min erfolgt und/oder
wobei Schritt (c-3) bei 10⁻² bis 10⁻⁶ mbar erfolgt und/oder
wobei Schritt (c-4) bei 10⁻² bis 10⁻⁶ mbar erfolgt und/oder
wobei die Leckrate in Schritt (c-2) ≤ 10⁻¹ und/oder in Schritt (c-3) ≤10⁻¹ und/oder in den Schritten (c-4) oder (c-5) ≤10⁻¹ ist und/oder
wobei Schritt (c-5) bei einer Abkühlrate von 3-20 K/min, bevorzugt 3-7 K/min und/oder innerhalb von 20-110 min erfolgt und/oder
wobei Schritt (c-5) bei 10⁻² bis 10⁻⁶ mbar erfolgt und/oder
wobei Schritt (c-6) bei einer Abkühlrate von 0,5-35 K/min erfolgt und/oder innerhalb von 15-240 min und/oder
wobei Schritt (c-5) und/oder (c-6) durch Fluten mit Stickstoff erfolgt.

9. Verfahren nach einem der vorhergehenden Ansprüche, wobei die alkalische Lösung in Schritt (d) eine wässrige Alkalihydroxidlösung ist, die ggf. Tartrat enthält.

10. Katalysator erhältlich durch ein Verfahren nach einem der Ansprüche 1-9.

11. Verwendung des Katalysators nach Anspruch 10 in der Elektrolyse, Zink-Luft-Batterien, Chlor-Alkali-Elektrolyse.
